# EUROPÄISCHE PATENTSCHRIFT

(11) **EP 2 569 119 B1**
(45) Veröffentlichungstag und Bekanntmachung des Hinweises auf die Patenterteilung: **17.07.2019**
(21) Anmeldenummer: 11721017.9
(22) Anmeldetag: 11.05.2011
(51) Int. Cl.: B23B 29/034, B23B 41/12, B24B 33/02, B24B 33/08

(54) **VERFAHREN ZUR BEARBEITUNG EINER ZYLINDERBOHRUNG MIT GEOMETRISCH BESTIMMTER UND GEOMETRISCH UNBESTIMMTER SCHNEIDE**
METHOD FOR MACHINING A CYLINDER BORE BY MEANS OF A GEOMETRICALLY DEFINED CUTTER AND A GEOMETRICALLY UNDEFINED CUTTER
PROCÉDÉ D'USINAGE D'UN ALÉSAGE DE CYLINDRE À L'AIDE DE TAILLANTS GÉOMÉTRIQUEMENT DÉTERMINÉS ET GÉOMÉTRIQUEMENT INDÉTERMINÉS

(30) Priorität: 11.05.2010 DE 102010020931
(43) Veröffentlichungstag der Anmeldung: 20.03.2013
(73) Patentinhaber: Gehring Technologies GmbH, 73760 Ostfildern (DE)
(72) Erfinder: FLORES, Gerhard, 73760 Ostfildern (DE); BAUMGARTNER, Erwin, 73760 Ostfildern (DE); HUMMEL, Frank, 70499 Stuttgart (DE); RACH, Michael, 73776 Altbach (DE)
(74) Vertreter: DREISS Patentanwälte PartG mbB
(86) Internationale Anmeldenummer: PCT/EP2011/057600
(87) Internationale Veröffentlichungsnummer: WO 2011/141505

(56) Entgegenhaltungen:
- WO-A1-81/02404
- DE-B3- 10 359 347
- GB-A- 2 450 445

## Beschreibung

Die Erfindung betrifft ein Verfahren zur Bearbeitung einer zylindrischen Bohrung, vorzugsweise einer Zylinderbohrung einer Brennkraftmaschine.

Eine Vorrichtung zur Bearbeitung einer zylindrischen Bohrung, vorzugsweise einer Zylinderbohrung einer Brennkraftmaschine, umfasst einen Grundkörper, ein erstes Bearbeitungswerkzeug mit mindestens einer geometrisch bestimmten Schneide und ein zweites Bearbeitungswerkzeug mit mindestens einer geometrisch unbestimmten Schneide, wie es beispielsweise aus der DE 103 59 347 B3 bekannt ist. Bei dieser Vorrichtung werden ein Feinbohrwerkzeug und ein Honwerkzeug in einem Grundkörper integriert, wobei das Feinbohrwerkzeug an der Stirnseite des Grundkörpers angeordnet ist und in einem ersten Bearbeitungsgang die Bohrung auf das gewünschte Maß bringt. Anschließend, wenn die Vorrichtung tiefer in die Zylinderbohrung eintaucht, kommen die Honleisten des Honwerkzeugs zum Einsatz und die Oberfläche wird auf die gewünschte Funktionsrauhigkeit gehont. Durch die feste Zu- und Anordnung der beiden Werkzeuge wird sichergestellt, dass in einer Aufspannung sowohl das Feinbohren als auch das Honen erfolgt und somit die für das Honen erforderliche Materialzugabe minimiert werden kann. Außerdem entfallen die Nebenzeiten zum Wechsel des Werkzeugs bzw. zum Umspannen der Werkstücke. Insgesamt ergibt sich dadurch eine Verkürzung der Bearbeitungsdauer.

Allerdings ist dieses Kombinationswerkzeug nur dann anwendbar, wenn es ausreichend tief in das Werkstück eintauchen kann, weil das Feinbohrwerkzeug in axialer Richtung vor dem Honwerkzeug angeordnet ist. Außerdem wird die Steifheit des Feindrehwerkzeugs durch den langen Aufbau verringert, was sich negativ auf die Bearbeitungsgenauigkeit und die Leistungsfähigkeit auswirkt.

Des Weiteren ist es auch bekannt, an einer Honahle oberhalb der Honleisten Anfasschneiden vorzusehen. Diese Anfasschneiden, welche
eine geometrisch bestimmte Schneide haben, dienen dazu, nach Beendigung des Honvorgangs, eine Fase an die Zylinderbohrung anzubringen.

Aus der EP 0046806 B1 ist ein kombiniertes Feinbohr- und Honwerkzeug bekannt, bei dem die Schneiden und die Honleisten zustellbar sind. Nachteilig an der in diesem Dokument beschriebenen Art der Zustellung ist die erzielbare Genauigkeit der Zustellung. Außerdem sind die zwischen Honleisten und Werkstück vorhandenen Anpresskräfte nicht erfassbar.

Eine für die Durchführung des erfindungsgemäßen Verfahrens geeignete Grundmaschine ist aus der DE 10 2007 045 619 als flexible Bearbeitungsmaschine mit verschiebbaren Bearbeitungseinheiten zum Honen und/oder Feinbohren bekannt. Auf den Offenbarungsgehalt dieser Anmeldung wird hiermit Bezug genommen.

Aus der EP 0 049 806 A1 ist eine Vorrichtung bekannt mit zwei Werkzeugen (Schneide zum Anfasen und Honleisten), die über eine gemeinsame Zustellstange zugestellt werden können.

Aus der DE 10 2009 033 528 A1 ist eine Vorrichtung bekannt mit zwei Werkzeugen (Schneide zum Anfasen und Honleisten), die über separate Zustellstangen zugestellt werden können.

Aus der DE 103 59 347 B3 ist eine Vorrichtung bekannt mit zwei Werkzeugen (Schneide zum Anfasen und Honleisten), deren Schneide nicht einstellbar ist.

Aus der GB 2 450 445 A ist eine Vorrichtung bekannt mit zwei Werkzeugen (Schneide zum Anfasen und Honleisten), die über eine gemeinsame Zustellstange zugestellt werden

Der Erfindung liegt die Aufgabe zugrunde, ein Verfahren bereit zu stellen, das verschiedene Bearbeitungen und Bearbeitungsschritte an zylindrischen Bohrungen in einer Aufspannung ermöglicht, so dass die Produktivität gesteigert, die Qualität verbessert und mit Hilfe einer Werkzeugmaschine verschiedenste Kundenanforderungen flexibel und ohne aufwändige Umbauten umsetzbar sind. Diese Aufgabe wird erfindungsgemäß durch ein Verfahren gemäß Anspruch 1 gelöst.

Die Unteransprüche sind auf vorteilhafte Weiterbildung des erfindungsgemäßen Verfahrens gerichtet.

Die Zustellung über druckbetätigte Druckstangen ist besonders geeignet, um die Anpresskraft zwischen einem oder beiden Werkzeugen und der zu bearbeitenden Zylinderbohrung zu überwachen und zur Prozesssteuerung einzusetzen. Auch dadurch wird eine Verbesserung des Bearbeitungsergebnisses erzielt bei gleichzeitiger Reduktion der Bearbeitungszeit und einer verringerten Ausschussquote.

Um die axiale Zustellbewegung der ersten Druckstange in eine radiale Zustellbewegung des ersten Bearbeitungswerkzeugs umsetzen zu können, weist die erste Druckstange mindestens einen Zustellkonus auf. Dieser Zustellkonus bewirkt zusammen mit Zustellschrägen an den Bearbeitungswerkzeugen eine Umlenkung der axialen Zustellbewegung der Druckstangen in eine radiale Zustellbewegung der Bearbeitungswerkzeuge. Dadurch erfolgt die Übertragung der Zustellbewegung von den Druckstangen auf die Bearbeitungswerkzeuge sehr genau und spielfrei. Weil über die Zustellschrägen und den zugehörigen Zustellkonus eine relativ große Kontaktfläche zwischen Zustellkonus und Bearbeitungswerkzeug entsteht, ist der Verschleiß denkbar gering.

Damit beim Zurückziehen der Druckstangen sich auch die Bearbeitungswerkzeuge in radialer Richtung nach innen zurückbewegen, werden die Bearbeitungswerkzeuge formschlüssig und/oder kraftschlüssig, bevorzugt federbelastet, in Anlage an den mindestens einen Zustellkonus der Druckstangen gehalten. Dadurch wird auch sichergestellt, dass kein Spiel zwischen Zustelldruckstange und Bearbeitungswerkzeug entsteht.

Außerdem kann eine Kraftmessdose in den Druckstangen selbst oder in einer vorgelagerten Koppelstange vorgesehen werden, um die Anpresskraft zwischen Bearbeitungswerkzeug und Bohrungswand in radialer Richtung genau und in Echtzeit erfassen zu können. Die Kenntnis der Anpresskraft zwischen Bearbeitungswerkzeug und Bohrungswand ist ein wichtiger Parameter, mit dessen Hilfe die Bearbeitung gesteuert und das Bearbeitungsergebnis optimiert werden kann. Außerdem können zum Beispiel Schneidenbrüche erkannt und die Bearbeitung abgebrochen werden.

Auch die Überwachung der Bearbeitung in Echtzeit ist nur mit vertretbarem Aufwand möglich, wenn die Zustellkraft als Druckkraft über die Druckstangen in die Vorrichtung übertragen wird. Bei einer Übertragung auf Zug ist dies sehr viel aufwändiger bzw. mit einem deutlich höheren konstruktiven und apparativen Aufwand verbunden.

In bevorzugter Ausgestaltung ist das Bearbeitungswerkzeug mit mindestens einer geometrisch unbestimmten Schneide als Honwerkzeug, umfassend mehrere über den Umfang verteilte Honleisten, ausgebildet, während das Werkzeug mit mindestens einer geometrisch bestimmten Schneide zum Feindrehen, Feinbohren oder zum Anfasen ausgebildet ist. Zum Feinbohren oder -drehen ist das Werkzeug bevorzugt dann ausgebildet, wenn die zu bearbeitende Zylinderbohrung vor dem Honen noch in ihrer Position, Achsrichtung und/oder ihrer Geometrie verbessert werden muss, bevor der eigentliche Honvorgang einsetzt.

Eine weitere Verbesserung des Bearbeitungsergebnisses, aber auch eine weitere Reduktion der Bearbeitungszeiten wird dadurch erreicht, dass in dem Grundkörper mindestens eine Messdüse zur pneumatischen Erfassung des Durchmessers der zu bearbeitenden Zylinderbohrung vorgesehen ist. Dadurch ist es möglich, während der Bearbeitung, insbesondere während des Feinbohrens und während der Honbearbeitung, den Durchmesser der Zylinderbohrung zu erfassen und somit mit gleichbleibend niedriger Streuung den gewünschten Sollwert des Bohrungsdurchmessers in kürzester Zeit zu erreichen.

In vorteilhafter Ausgestaltung ist die mindestens eine Messdüse in axialer Richtung überlappend mit den Honleisten angeordnet. Dies bedeutet, dass der Bohrungsdurchmesser direkt an der Stelle, an der die Zylinderbohrung gehont wird, erfasst wird. Dadurch kann in Echtzeit und örtlich hoch aufgelöst der Bohrungsdurchmesser erfasst werden. Basierend auf diesen Messergebnissen können leichte Konizitäten der Zylinderbohrung ausgeglichen und/oder gezielt der Durchmesser an verschiedenen Stellen der Zylinderbohrung gesteuert werden. Die Messdüsen signalisieren indirekt über den von Ihnen ermittelten Bohrungsdurchmesser auch, ob die Schneidplatten verschlissen sind.

Die Vorteile dieser Vorrichtung können insbesondere dann voll realisiert werden, wenn die in der Werkzeugmaschine vorhandenen Zustellung der ersten Druckstange und/oder der zweiten Druckstange elektromechanisch erfolgt. Dann nämlich ist es möglich, mit einem Schrittmotor und einer Gewindespindel die Druckstangen mit der gewünschten Präzision und Wiederholgenauigkeit in axialer Richtung relativ zu dem Grundkörper zu bewegen, so dass sich über die Umlenkung mit Hilfe des Zustellkonus und der Zustellschrägen die gewünschte radiale Zustellung der Bearbeitungswerkzeuge einstellt.

Damit das Bearbeitungsergebnis weiter verbessert und die Bearbeitungszeit weiter reduziert werden kann, ist es besonders bevorzugt, wenn die Zustellung kraftgesteuert erfolgt. Wenn nämlich über geeignete Sensoren in der ersten Druckstange und/oder der zweiten Druckstange die Anpresskraft des Bearbeitungswerkzeugs an der Zylinderbohrung während der Bearbeitung erfasst wird, kann die Prozessführung weiter optimiert werden, was sich in entsprechend verbesserten Bearbeitungsergebnissen niederschlägt. Außerdem können Störungen, wie beispielsweise eine abgebrochene Schneide, unmittelbar erkannt werden, so dass die Maschine abgeschaltet und Folgeschäden vermieden werden. Außerdem werden die Stillstandszeiten reduziert, was eine weitere Verbesserung der Wirtschaftlichkeit zur Folge hat.

Weitere Vorteile und vorteilhafte Ausgestaltungen der Erfindung sind der nachfolgenden Zeichnung, deren Beschreibung und den Patentansprüchen entnehmbar. Alle in der Zeichnung, der Beschreibung und den Patentansprüchen beschriebenen Merkmale können sowohl einzeln als auch in beliebiger Kombination miteinander erfindungswesentlich sein.

Es zeigen
Figur 1 ein erstes Ausführungsbeispiel einer Vorrichtung zur Durchführung des erfindungsgemäßen Verfahrens mit einer Zustellung der Honleisten und fest eingestellter Schneide zum Feinbohren,
Figur 2 ein zweites Ausführungsbeispiel einer Vorrichtung, bei der sowohl die Honleisten als auch die Schneiden des Feinbohrwerkzeugs radial zustellbar sind,
Figur 3 ein drittes Ausführungsbeispiel einer Vorrichtung mit radial zustellbaren Honleisten und zum Anfasen einer Zylinderbohrung,
Figur 4 eine elektromechanische Zustellung, die bevorzugt kraftgesteuert ist, sowohl für die erste Druckstange als auch für die zweite Druckstange der Vorrichtung und
Figur 5 ein erfindungsgemäßes Bearbeitungsverfahren.

### Beschreibung der Ausführungsbeispiele

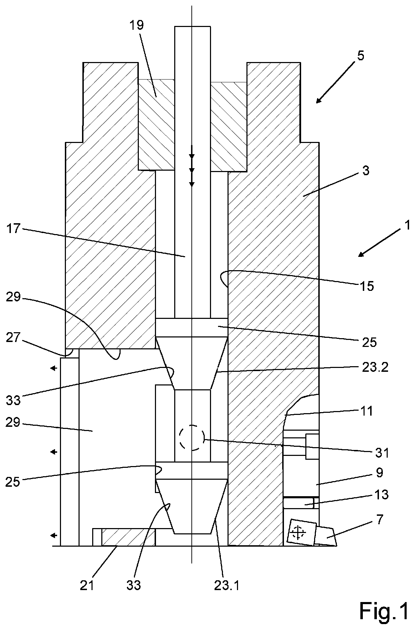

In Figur 1 zeigt einen Längsschnitt durch ein erstes Ausführungsbeispiel einer Vorrichtung 1 zur Durchführung des erfindungsgemäßen Verfahrens. Die Vorrichtung 1 umfasst einen im Wesentlichen rotationssymmetrischen Grundkörper 3. An dem in Figur 1 oberen Ende wird die Vorrichtung 1 starr in einer nicht dargestellten Werkzeugaufnahme einer Werkzeugmaschine aufgenommen. Um Rundlauf und Planlauf des Grundkörpers 3 zu gewährleisten, ist zu diesem Zweck an dem Grundkörper 3 ein Absatz 5 für die zentrische und axiale Positionierung vorgesehen, der mit einer entsprechenden Aufnahme an der Werkzeugmaschine zusammenwirkt. In dem vorliegenden Fall ist der Grundkörper starr mit der Spindel der nicht dargestellten Werkzeugmaschine verbunden.

An dem in Figur 1 unteren Ende des Grundkörpers 3 ist eine Schneidplatte 7 sichtbar, die mit Hilfe eines Schneidplattenträgers 9 in einer Tasche 11 des Grundkörpers 3 festgeschraubt ist. Dieser Schneideinsatz, umfassend die Schneidplatte 7 und den Schneidplattenträger 9, lässt sich während der Bearbeitung nicht zustellen. Es ist vielmehr so, dass mit Hilfe einer Madenschraube 13, die mit einem entsprechenden Innengewinde in dem Schneidplattenträger 9 zusammenwirkt, der Schneidplattenträger 9 und mit ihm die Schneidplatte 7 in radialer Richtung relativ zum Grundkörper 3 bewegt werden können. Dadurch ist eine Voreinstellung der Schneidplatte 7 möglich, die bevorzugt außerhalb der Werkzeugmaschine an einem besonders dafür ausgerichteten Arbeitsplatz vorgenommen wird. Damit ist es möglich, den Bohrungsdurchmesser der zu bearbeitenden Bohrung sehr genau einzustellen.

Der Grundkörper 3 weist eine Zentralbohrung 15 auf, in der eine erste Druckstange 17 geführt ist. Die erste Druckstange 17 ist an dem oberen Ende des Grundkörpers 3 in einer Lagerbuchse 19 axial verschiebbar geführt. An dem in Figur 1 unteren Ende, das heißt, in der Nähe einer Stirnseite 21 des Grundkörpers 3 weist die erste Druckstange 17 zwei Zustellkoni 23 auf.

Die Zustellkoni 23 und 23 gehen in einen zylindrischen Führungsabschnitt 25 über. Die Führungsabschnitte 25 sind so auf den Durchmesser der Mittenbohrung 15 abgestimmt, dass dadurch eine Radiallagerung der ersten Druckstange 17 erfolgt und die Druckstange 17 gleichzeitig axial relativ zum Grundkörper 3 verschiebbar ist.

Gegenüberliegend von der Schneidplatte 7 ist in dem Grundkörper 3 ein Fenster 27 ausgespart, in dem eine Honleiste 29 radial verschiebbar geführt wird. Die Honleiste 29 weist zwei Zustellschrägen 33 auf, die mit den Zustellkoni 23 der ersten Druckstange 17 zusammenwirken. Dadurch, dass die Honleiste 29 über zwei Zustellschrägen 33 mit den beiden Zustellkoni 23 der ersten Druckstange 17 zusammenwirkt, ist sichergestellt, dass die Honleiste 29 stets genau radial nach außen zugestellt wird und nicht "kippt". Federelemente, welche die Honleiste 29 in Anlage an den Zustellkoni 23 halten, sind aus Gründen der Übersichtlichkeit nicht dargestellt.

Die Zustellbewegung der ersten Druckstange 17 ist in der Figur 1 durch Pfeile (ohne Bezugszeichen) dargestellt. Daraus resultiert eine radiale Zustellung der Honleiste 29. Weil die Zustellkraft als Druckkraft über die erste Druckstange 17 in die Vorrichtung 1 eingeleitet wird, ist es auch möglich, in der ersten Druckstange 17 oder vorgelagert in dem Antrieb in der nicht dargestellten Werkzeugmaschine eine Kraftmesseinrichtung vorzusehen. Dadurch ist es möglich, die zwischen Honleiste 29 und der zu bearbeitenden Zylinderbohrung herrschenden Anpresskräfte in Echtzeit zu erfassen und während der Bearbeitung zur Steuerung des Bearbeitungsprozesses einzusetzen.

Es versteht sich von selbst, dass beispielsweise mehrere Schneidplatten 7 und Honleisten 29 über den Umfang verteilt in dem Grundkörper 3 vorgesehen sind. So können beispielsweise zwei oder drei Schneidplatten 7 bzw. drei oder fünf Honleisten 29 über den Umfang verteilt in dem Grundkörper angeordnet sein. Die Schneidplatten 7 können in axialer Richtung versetzt zueinander an dem Grundkörper 3 angeordnet sein. Dadurch wird erreicht, dass die Zylinderbohrung nacheinander von den verschiedenen Schneidplatten 7 bearbeitet wird.

Um den Durchmesser der zu bearbeitenden Zylinderbohrung während der Bearbeitung erfassen und die Bearbeitung in Abhängigkeit des Durchmessers der Zylinderbohrung 35 steuern zu können, sind in dem Grundkörper 3 eine oder mehrere Messdüsen 31 angeordnet. Die Messdüsen 31 sind in axialer Richtung etwa auf Höhe der Honleisten 29 angeordnet, so dass sowohl während des Langhubhonens als auch während eines eventuellen Kurzhubhonens der von den Honleisten 29 erreichte Durchmesser der Zylinderbohrung 35 während der Bearbeitung erfasst und zur Steuerung des Bearbeitungsvorgangs eingesetzt werden kann.

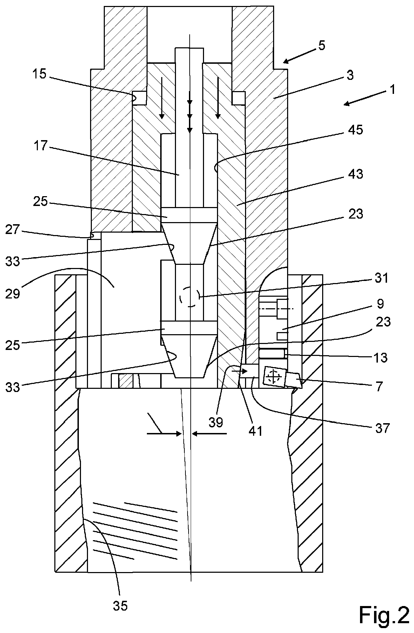

In den Figuren 1 und 2 ist die Messdüse 31 nur durch einen Kreis mit einer gestrichelten Linie angedeutet, da die Messdüse 31 hinter der ersten Druckstange 17 angeordnet ist. Die Versorgung der Messdüse 31 mit Druckluft innerhalb des Grundkörpers 3 ist nicht dargestellt.

In jedem Fall ist die Messdüse 31 oberhalb der Schneidplatten 7 im Grundkörper 3 angeordnet und ermöglicht so während des Bearbeitungsprozesses eine Erfassung des Bohrungsdurchmessers.

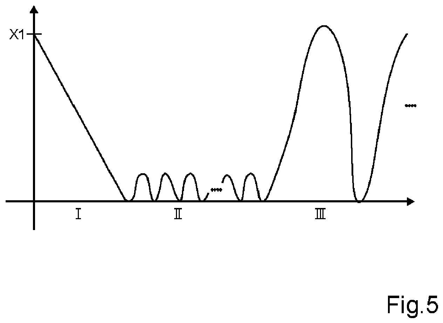

Durch die Positionierung der Messdüse 31 in axialer Richtung auf Höhe der Honleisten 29, kann auch bei dem Kurzhubhonen (s. Figur 5) eine Erfassung des Bohrungsdurchmessers in dem von der Kurzhubhonung bearbeiteten Bereich der Zylinderbohrung erfasst werden und in der Maschinensteuerung entsprechend berücksichtigt werden.

Nicht dargestellt sind Kühlmittelzufuhren, mit deren Hilfe die Schneidplatten 7 aber auch die Honleisten 29 mit Kühlschmiermittel versorgt werden können.

In Figur 2 ist ein zweites Ausführungsbeispiel einer Vorrichtung dargestellt. Gleiche Bauteile werden mit den gleichen Bezugszeichen versehen und es gilt das bezüglich der anderen Figuren Gesagte entsprechend. In Figur 2 ist die Vorrichtung 1 beim Feindrehen einer grob vorbearbeiteten Zylinderbohrung 35 dargestellt. Durch die starre Aufnahme des Grundkörpers 3 in der nicht dargestellten Werkzeugmaschine ist es möglich, sowohl die Position als auch die Richtung der Zylinderbohrung 35 durch das Feindrehen zu korrigieren. Dies ist in Figur 2 durch einen Winkel α zwischen der Drehachse der Vorrichtung 1 und der Mittenachse der grob vorbearbeiteten Zylinderbohrung 35 angedeutet. Die Korrektur der Position der Zylinderbohrung 35 durch das Feindrehen wird in Figur 2 dadurch deutlich, dass auf der linken Seite die Schneidplatte 7 deutlich weniger Material abträgt, als auf der rechten Seite. Dadurch ergibt sich eine Korrektur der Position der Zylinderbohrung 35.

Bei dem in Figur 2 dargestellten Ausführungsbeispiel ist die Schneidplatte 7 bzw. der Schneidplattenträger 9 radial zustellbar. Dies erfolgt dadurch, dass radial innen an dem Schneidplattenhalter 9 eine Nase 37 mit einer Zustellschräge 39 ausgebildet ist. Die Zustellschräge 39 wirkt mit einem Zustellkonus 41 einer zweiten Druckstange 43 zusammen. Die zweite Druckstange 43 weist eine Innenbohrung 45 auf, die zur radialen Führung der ersten Druckstange 17 dient. Außerdem übernimmt die zweite Druckstange 43 an ihrem in Figur 2 oberen Ende die Aufgabe der Lagerbuchse 19 (s. Figur 1).

Die zweite Druckstange 43 wiederum ist an der Mittenbohrung 15 des Grundkörpers 3 gelagert. Bei diesem Ausführungsbeispiel sind somit die Schneidplatte 7 als auch die Honleiste 29 getrennt voneinander während der Bearbeitung radial zustellbar.

Da die Druckstangen 17 und 43 mit ihren Zustellkoni 23 und 41 radial symmetrisch sind, können grundsätzlich beliebig viele Honleisten 29 und Schneidplatten 7 zugestellt werden. Selbstverständlich gibt es technologische Randbedingungen, die einzuhalten sind und außerdem muss natürlich genügend Platz in dem Grundkörper 3 vorhanden sein. Da auch die zweite Druckstange 43 die Zustellbewegung über eine Druckkraft, die ebenfalls durch Pfeile in Figur 2 angedeutet ist, auf die Schneidplatten 7 überträgt, ist es auch hier möglich, die Zustellkraft über eine Kraftmessdose (nicht dargestellt) zu erfassen und zur Steuerung bzw. Überwachung des Feindrehprozesses einzusetzen.

Während der in Figur 2 dargestellten Bearbeitung der Zylinderbohrung 35 durch Feindrehen sind die Honleisten 29 zurückgefahren, so dass sie keinen Kontakt mit der feingedrehten Zylinderbohrung 35 haben. Sobald die Zylinderbohrung 35 feingedreht wurde, kann die Schneidplatte 7 durch Herausfahren der zweiten Druckstange 43 wieder radial nach innen bewegt werden und gleichzeitig werden die Honleisten 29 durch Betätigen der ersten Druckstange 17 radial nach außen zugestellt. Sobald es eine nennenswerte Zustellkraft gibt, weil sich die Honleisten 29 an die feingedrehte Zylinderbohrung 35 angelegt haben, kann eine Kraft und/oder weggesteuerte Steuerung der Zustellung erfolgen, so dass optimale Bearbeitungsergebnisse bei gleichzeitig verkürzter Bearbeitungszeit erreicht werden.

Unter kraftgesteuerter Zustellbewegung wird eine schrittweise Zustellung der Honleisten 29 verstanden, bei die Anpresskraft während der Bearbeitung in Echtzeit überwacht wird. Erst, wenn die Anpresskraft zwischen Honleisten 29 und der Zylinderbohrung 35 einen vorgegebenen Schwellwert unterschritten hat, wird eine weitere Zustellung vorgenommen.

Durch diese kraftgesteuerte Zustellbewegung wird sichergestellt, dass einerseits immer die technologisch optimale Anpresskraft vorhanden ist. Gleichzeitig ist sichergestellt, dass es nicht zu unzulässig hohen Anpresskräften kommt, weil beispielsweise der Verschleiß der Schleifkörper in der Honleiste 29 oder das Zusetzen der Honleiste 29 durch Metallabrieb berücksichtigt werden kann.

Beim Feindrehen kann die Zustellkraft bzw. die Radialkraft, die zwischen Schneidplatte 7 und Zylinderbohrung 35 vorhandenen Radialkraft ebenfalls zur Steuerung und Überwachung des Feindrehvorgangs herangezogen werden. So kann beispielsweise erkannt werden, ob die Schneidplatte 7 stumpf geworden ist, wenn sich die Anpresskraft kontinuierlich erhöht.

Wenn die Anpresskraft schlagartig abnimmt, ist dies ein Indiz für eine gebrochene Schneidplatte 7 und kann zum Abbruch der Bearbeitung und der Ausgabe einer Störungsmeldung genutzt werden.

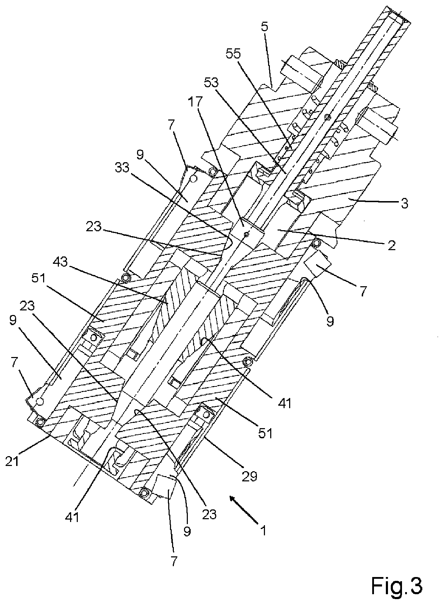

In Figur 3 ist ein drittes Ausführungsbeispiel einer Vorrichtung dargestellt. Bei diesem Ausführungsbeispiel sind in axialer Richtung vor und hinter den Honleisten 29 Schneidplatten 7 angeordnet, die zum Anfasen der Zylinderbohrung 35 an ihrem oberen und ihrem unteren Ende dienen.

Die Schneidplatten 7 sind, ähnlich wie bei den Ausführungsbeispielen gemäß der Figuren 1 und 2, auf einem Schneidplattenträger 9 befestigt. Anders als bei den zuvor beschriebenen Ausführungsbeispielen sind diese Schneidplattenträger 9 an Zwischenstücken 51 befestigt, die radial verschiebbar in dem Grundkörper 3 angeordnet sind. Die Zwischenstücke 51 weisen Zustellschrägen 39 auf, die mit entsprechenden Zustellkoni 23 der ersten Druckstange 17 zusammenwirken. Dadurch ist sichergestellt, dass die Schneidplatten 7 an der Stirnseite 21 und an dem entgegengesetzten Ende des Grundkörpers 3 parallel zugestellt werden und somit die Fasen am oberen und am unteren Ende der Zylinderbohrung 35 gleichzeitig hergestellt werden.

Bei der Darstellung gemäß Figur 3 sind die Schneidplatten 7 zum Anfasen und die Zwischenträger 51 besonders gut zu sehen, da sie 180° zueinander versetzt angeordnet sind. Demzufolge sind die Honleisten 29 bei diesem Ausführungsbeispiel nicht ganz so gut zu sehen, da sie nicht direkt in der Schnittebene dargestellt sind. Allerdings ist in Figur 3 rechts unten eine Honleiste 29 zu sehen. Diese Honleiste 29 wird, wie die anderen nicht sichtbaren Honleisten, über die zweite Druckstange 43 mit ihren Zustellungskoni 41 und den mit ihnen zusammen wirkenden Zustellschrägen (ohne Bezugszeichen) radial zugestellt.

Durch den Vergleich der Ausführungsbeispiele gemäß der Figuren 1 und 2 einerseits sowie des Ausführungsbeispiels gemäß Figur 3 wird deutlich, dass die Schneidplatten 7 entweder mit der ersten Druckstange 17 oder der zweiten Druckstange 43 betätigt werden können. Entsprechend können auch die Honleisten 29 je nach Bedarf und praktischen Erfordernissen entweder mit der ersten oder mit der zweiten Druckstange 17, 43 zugestellt werden.

Bei der Vorrichtung 1 gemäß Figur 3 ist der Grundkörper 3 nicht starr, sondern gelenkig mit der Werkzeugmaschine verbunden, so dass sich die Vorrichtung über die Honleisten 29 in der bereits vorhandenen Bohrung 35 anlegt und ausrichtet. Dies ist immer dann hilfreich, wenn die Position und Achsrichtung der zu bearbeitenden Bohrung nicht korrigiert werden soll, sondern an der gesamten Zylinderoberfläche ein gleichmäßiger Materialabtrag erreicht werden soll. Dies ist zum Beispiel dann der Fall, wenn die Zylinderbohrung mit einer Verschleißschutzschicht beschichtet wurde und diese Verschleißschicht nun hinsichtlich Geometrie, Durchmesser und Oberflächenstruktur den Anforderungen des Anwendungsfalls entsprechend durch Honen bearbeitet werden muss. Dann ist es auch oft erforderlich, die oberen und unteren Enden der Zylinderbohrung 35 mit den Schneidplatten 7
anzufasen, um ein Abplatzen der Verschleißschutzschicht an den Enden der Zylinderbohrung 35 zu verhindern.

In Figur 3 ist am oberen Ende des Grundkörpers 3 deutlich zu sehen, dass die Druckstangen 17 und 43 über Koppelstangen 53 und 55 betätigt werden. Die Koppelstangen 53 und 55 sind Teil der Werkzeugmaschine, welche die Vorrichtung 1 antreibt.

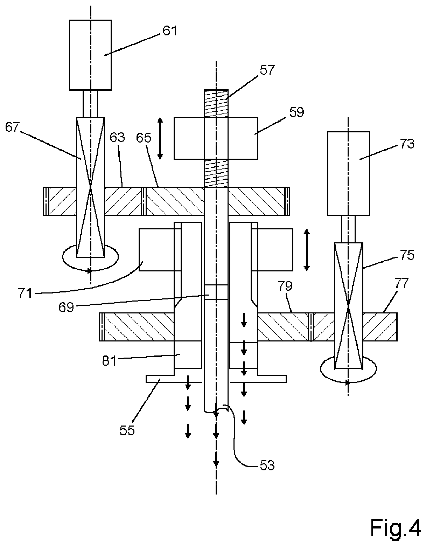

In Figur 4 ist ein Ausschnitt aus einer Werkzeugmaschine dargestellt, die schematisch die Funktionsweise der elektromechanischen Zustellung veranschaulicht.

Am oberen Ende der ersten Koppelstange 53 ist ein Gewinde 57 vorgesehen, das mit einer feststehenden Mutter 59 zusammenwirkt. Die Mutter 59 macht die oszillierende Vorschubbewegung beim Honen und auch beim Feindrehen mit. Dies ist durch einen Doppelpfeil neben der Mutter 59 angedeutet. Über die Aufnahme 5 an den Vorrichtungen (nicht dargestellt in Figur 4) wird diese oszillierende Hubbewegung auch auf die den Grundkörper 3 der erfindungsgemäßen Vorrichtung übertragen.

Um die Koppelstange 53 relativ zum Grundkörper 3 in axialer Richtung bewegen zu können, ist ein erster elektrischer Schrittmotor 61 vorgesehen, der über zwei Zahnräder 63, 65 die Koppelstange 53 schrittweise relativ zu der Mutter 59 verdrehen kann. Dadurch wird eine axiale Relativbewegung zur oszillierenden ersten Mutter 59, aber auch zum Grundkörper 3 der Vorrichtung ausgeführt.

Das zweite Zahnrad 65 kann beispielsweise auf die erste Koppelstange 53 aufgeschrumpft sein. Dies bedeutet auch, dass das erste Zahnrad 63 die oszillierende Hubbewegung mitmachen muss, damit die Zahnräder 63 und 65 immer miteinander kämmen.

Deshalb weist der erste Elektromotor 61 eine relativ lange Ausgangswelle 67 mit einem Zweiflach oder einer anderen Welle-Nabe-Verbindung auf, die ein axiales Verschieben des ersten Zahnrads 63 relativ zu der Welle 67 des ersten Elektromotors 61 erlaubt.

Selbstverständlich wäre es auch möglich, das erste Zahnrad 63 starr mit der Welle 67 zu verbinden und das zweite Zahnrad 65 ortsfest in der Werkzeugmaschine zu lagern und die Verbindung zwischen zweitem Zahnrad 65 und erster Koppelstange 53 so auszugestalten, dass die erste Koppelstange 53 in axialer Richtung sich relativ zu dem zweiten Zahnrad bewegen kann und gleichzeitig eine formschlüssige Drehmomentübertragung zwischen zweitem Zahnrad 65 und erster Koppelstange 53 möglich ist. Dies wäre gewissermaßen eine kinematische Umkehr der in Figur 4 dargestellten Situation.

Damit die zwischen Honleisten 29 und zu bearbeitender Zylinderbohrung 35 wirkenden Anpresskräfte während der Bearbeitung in Echtzeit erfasst werden können, ist in der ersten Koppelstange 53 eine erste Kraftmesssensor 69 integriert, die Aufschluss auf die auf die erste Koppelstange 53 wirkenden Druckkräfte in axialer Richtung gibt. Diese von dem ersten Kraftmesssensor 69 bereit gestellten Ausgangssignale können in der Maschinensteuerung zur Überwachung und/oder zur Steuerung des Bearbeitungsprozesses eingesetzt werden. Somit stellt der Antrieb der ersten Koppelstange 53 eine elektromechanische kraftgesteuerte Zustellbewegung der ersten Koppelstange 53 bereit.

Die zweite Koppelstange 55 wird in ähnlicher Weise betätigt. Hier ist eine zweite Mutter 71 vorgesehen, die ebenfalls die von der Werkzeugmaschine bereit gestellte Hubbewegung mitmacht. In diese zweite Mutter 71 ist ein Gewinde der zweiten Koppelstange 55 eingedreht. Die zweite Koppelstange 55 wiederum wird über einen zweiten Elektromotor 73, mit einer Ausgangswelle 75 sowie einem ersten Zahnrad 77 und einem zweiten Zahnrad 79 in ähnlicher Weise wie die erste Koppelstange 53 bei Bedarf schrittweise verdreht, um eine Zustellung der mit der zweiten Koppelstange 55 verbundenen Werkzeuge der Vorrichtung 1 zustellen zu können. Auch hier ist es natürlich möglich, dass das erste Zahnrad 77 starr mit der Welle 65 des zweiten Elektromotors 73 verbunden wird und die Relativbewegung, die aus dem Hub der Mutter 79 der zweiten Mutter 71 resultierende oszillierende Bewegung der zweiten Koppelstange 55 durch eine axiale Verschiebbarkeit zwischen dem zweiten Zahnrad 79 und der zweiten Koppelstange 55 gewährleistet wird.

Auch in der zweiten Koppelstange 55 ist ein Kraftmesssensor 81 vorgesehen, welcher eine Erfassung der Zustellkraft in Echtzeit während der Bearbeitung ermöglicht. Somit ist auch eine elektromechanische kraftgesteuerte Zustellbewegung der zweiten Koppelstange 55 möglich.

In Figur 5 ist ein Ablaufdiagramm eines erfindungsgemäßen Verfahrens zur Bearbeitung einer Zylinderbohrung 35 mit einer Vorrichtung gemäß beispielsweise der Figur 1 dargestellt. Bei dieser Vorrichtung 1 ist die geometrisch bestimmte Schneide 7 fest eingestellt und kann während der Bearbeitung nicht zugestellt werden.

In der Abszisse sind drei aufeinanderfolgende Bearbeitungsschritte I, II und III aufgetragen. Die Länge der einzelnen Abschnitte hängt naturgemäß von den Randbedingungen der zu bearbeitenden Zylinderbohrung 35 ab. Sie kann entweder zeitgesteuert oder in Abhängigkeit von dem erreichten Bearbeitungsergebnis, beispielsweise durch eine kontinuierliche Durchmesserüberwachung der Zylinderbohrung mit Hilfe der Messdüse erfolgen.

Auf der Y-Achse ist eine Längskoordinate X der zu bearbeitenden Bohrung normiert aufgetragen. Die Koordinatenrichtung X verläuft parallel zur Längsachse der zu bearbeitenden Zylinderbohrung. Der Wert X = O entspricht dem unteren Ende der Zylinderbohrung, dort wo beispielsweise die Lagerstühle der Kurbelwellenlagerung angeordnet sind.

In dem ersten Bearbeitungsschritt I wird die bereits vorhandene grob bearbeitete Zylinderbohrung 35 durch Feindrehen bearbeitet. Dabei taucht die Vorrichtung mit von oben, das heißt bei X = 1, in die Zylinderbohrung 35 ein und führt eine Feinbearbeitung der zu bearbeitenden Zylinderbohrung 35 durch. Dabei werden, wie bereits erwähnt, eine eventuelle Positionsänderung der Bohrungsmitte oder ein Achsfehler ausgeglichen, und der Bohrungsdurchmesser innerhalb sehr enger Toleranzen hergestellt.

In dem ersten Bearbeitungsschritt I fährt die Vorrichtung 1 von oben nach unten in die Zylinderbohrung 35 ein, bis die Schneidplatten 7 am unteren Ende der Zylinderbohrung 35 angelangt sind. Dann ist der erste Bearbeitungsschritt I abgeschlossen.

Wenn man nun, ohne weitere Vorkehrungen zu treffen, direkt mit dem Fertighonen (s. Bearbeitungsschritt III) fortfahren würde, hätte dies die unerwünschte Folge, dass die Spitze der Schneidplatte 7 im unteren Teil der Zylinderbohrung Riefen erzeugt. Diese Riefen sind unerwünscht, weil diese Riefen auch nach dem Fertig- oder Langhubhonen nicht vollständig verschwinden. Außerdem kann es zu Schneidenausbrüchen an der Schneidplatte 7 kommen, was ebenfalls unerwünscht ist.

Um dies zu vermeiden, wird in einem zweiten Bearbeitungsschritt II in dem Teil der Zylinderbohrung 35 in den die Schneidplatten 7 während des dritten Bearbeitungsschritts III (Fertighonen) eintauchen, ein Kurzhubhonen (Schritt II) ausgeführt. Dabei ist zu berücksichtigen, dass, wie sich aus der Figur 1 ergibt, die Honleisten 29 in axialer Richtung eine längere Erstreckung haben, als die Schneidplatten 7.

Dies macht man sich für den Schritt II zunutze. In dem Schritt II wird der Durchmesser in dem unteren Bereich der Zylinderbohrung 35 so erweitert, dass beim anschließenden Langhubhonen oder Fertighonen (Schritt III) die starren Schneidplatten 7 keine Riefen mehr verursachen. Der Hub beim Kurzhubhonen (Schritt II) wird so bestimmt, dass die Honleisten 29 so weit von unten in die Zylinderbohrung 35 eintauchen, wie die Schneidplatten 7 beim anschließenden Langhubhonen (Schritt III).

Dabei kann durch dieses Kurzhubhonen im zweiten Bearbeitungsschritt II die Bohrung bereits mit einem Aufmaß von beispielsweise 0,01 mm - 0,005 mm auf den endgültigen Durchmesser gebracht werden.

Wenn dieser Zustand erreicht wurde, kann entweder in Abhängigkeit vom erreichten Durchmesser oder zeitgesteuert der zweite Bearbeitungsschritt II beendet werden und die Zylinderbohrung 35 im dritten Bearbeitungsschritt III fertiggehont werden.

Durch dieses erfindungsgemäße Verfahren ist es möglich, auch mit einer Vorrichtung 1 mit nicht zustellbarer Schneidplatte 7 eine sehr leistungsfähige und qualitativ hochwertige Bearbeitung durchzuführen. Bei Vorrichtungen, bei denen die Schneidplatten 7 während der Bearbeitung zustellbar sind, kann der zweite Bearbeitungsschritt II entfallen, da die Schneidplatten 7 nach der Bearbeitung radial wieder nach innen eingefahren werden können und somit eine Beschädigung der Zylinderbohrung während des anschließenden Bearbeitungsschritts III (Fertighonen) nicht mehr zu besorgen ist. Wichtig ist, dass das Kurzhubhonen einen Hub aufweist, der ein kollisionsfreies axiales Verfahren der Schneidplatten 7 beim anschließenden Langhubhonen sicherstellt. Das Kurzhubhonen wird also auf der Länge ausgeführt, innerhalb der beim anschließenden Langhubhonen (Bearbeitungsschritt III) die fest eingestellten Schneidplatten 7 ihren oberen Hubumkehrpunkt errechen.

## Patentansprüche

1. Verfahren zum Bearbeiten einer zylindrischen Bohrung (35) mit einer Vorrichtung (1) umfassend ein Bearbeitungswerkzeug mit mindestens einer geometrisch bestimmten Schneide (7) und ein Bearbeitungswerkzeug mit mindestens einer geometrisch unbestimmten Schneide (29) aufweist, wobei das Bearbeitungswerkzeug mit geometrisch unbestimmter Schneide (29) während der Bearbeitung der Bohrung (35) zustellbar ist und das Bearbeitungswerkzeug mit geometrisch bestimmter Schneide (7) während der Bearbeitung der Bohrung (35) nicht zustellbar ist, **dadurch gekennzeichnet, dass** das Bearbeitungsverfahren aus drei Schritten (I, II, III) besteht, dass in einem ersten Bearbeitungsschritt (Schritt I) die Bohrung (35) durch das Bearbeitungswerkzeug mit geometrisch bestimmter Schneide (7) bearbeitet wird, dass in einem zweiten Bearbeitungsschritt (Schritt II) die Bohrung (35) in ihrem unteren Bereich durch Kurzhubhonen erweitert wird, so dass beim anschließenden Langhubhonen die Schneidplatten (7) keine Riefen mehr verursachen, und dass in einem dritten Bearbeitungsschritt (Schritt III) die Bohrung (35) durch Langhubhonen bearbeitet wird.

2. Verfahren nach Anspruch 1, **dadurch gekennzeichnet, dass** während der Bearbeitung (Schritte I, II, und/oder III) der Bohrung (35) der Durchmesser der Bohrung und/oder die Anpresskraft der Schneidplatte (7) und/oder der Honleisten (29) erfasst wird.

3. Verfahren nach Anspruch 2, **dadurch gekennzeichnet, dass** die Anpresskraft der Schneidplatte (7) und/oder der Honleisten (29) zur Überwachung und/oder Steuerung der Bohrungsbearbeitung ausgewertet wird.

4. Verfahren nach einem der Ansprüche 1 bis 3, **dadurch gekennzeichnet, dass** die Zustellung des oder der Bearbeitungswerkzeuge weggesteuert und/oder kraftgesteuert erfolgt.

## Claims

1. Method for machining a cylindrical bore (35) with a device (1) comprising a machining tool having at least one geometrically defined cutting edge (7) and a machining tool with at least one geometrically undefined cutting edge (29), wherein the machining tool having a geometrically undefined cutting edge (29) is feedable during machining of the bore (35), and the machining tool with geometrically defined cutting edge (7) is not feedable during machining of the bore (35), **characterized in that** the method consists of three steps (I, II, III), that in a first machining step (step I) the bore (35) is machined by the machining tool having at least one geometrically defined cutting edge (7), that in a second machining step (step II) the bore (35) is machined in its lower part by short-stroke honing, such that during the subsequent long-stroke honing the cutting plates (7) will not cause scoring, and that in a third step (step III) the hole (35) is machined by long-stroke honing.

2. Method according to claim 1, **characterized in that** during the machining (steps I, II, and/or III) of the hole (35) the diameter of the hole and/or the contact force of the cutting plate (7) and/or the honing strips (29) is detected.

3. Method according to claim 2, **characterized in that** the contact pressure of the cutting insert (7) and/or the honing bars (29) for monitoring and/or controlling the drilling machining is evaluated.

4. Method according to one of claims 1 to 3, **characterized in that** the feed of the machining tool(s) is realized by travel control and/or force control.

## Revendications

1. Procédé d'usinage d'un trou cylindrique (35) au moyen d'un dispositif (1) comprenant un outil d'usinage pourvu d'au moins un tranchant géométriquement défini (7) et un outil d'usinage pourvu d'au moins un tranchant géométriquement non défini (29), dans lequel l'outil d'usinage pourvu du tranchant géométriquement non défini (29) peut être avancé pendant l'usinage du trou (35) et l'outil d'usinage pourvu du tranchant géométriquement défini (7) ne peut pas être avancé pendant l'usinage du trou (35), **caractérisé en ce que** le procédé d'usinage comporte trois étapes (I, II, III), **en ce qu'**au cours d'une première étape d'usinage (étape I), le trou (35) est usiné par l'outil d'usinage pourvu du tranchant géométriquement défini (7), **en ce qu'**au cours d'une deuxième étape d'usinage (étape II), le trou (35) est élargi dans sa zone inférieure par rodage à faible course, de sorte que, lors d'un rodage à longue course subséquent, les plaquettes de coupe (7) ne provoquent plus de stries, et **en ce que**, au cours d'une troisième étape d'usinage (étape III), le trou (35) est usiné par un rodage à longue course.

2. Procédé selon la revendication 1, **caractérisé en ce que**, pendant l'usinage (étapes I, II et/ou III) du trou (35), le diamètre du trou et/ou la force de pression de la plaquette de coupe (7) et/ou des baguettes de rodage (29) sont détectés.

3. Procédé selon la revendication 2, **caractérisé en ce que** la force de pression de la plaquette de coupe (7) et/ou des baguettes de rodage (29) est évaluée pour surveiller et/ou commander l'usinage du trou.

4. Procédé selon l'une quelconque des revendications 1 à 3, **caractérisé en ce que** l'avancement de l'outil ou des outils d'usinage est commandé proportionnellement à la course et/ou de façon assistée.
